# EUROPEAN PATENT SPECIFICATION

(11) **EP 2 477 794 B1**
(45) Date of publication and mention of the grant of the patent: **04.03.2020**
(21) Application number: 10857204.1
(22) Date of filing: 16.09.2010
(51) Int. Cl.: B27N 3/00, B29C 35/02, C08J 3/24

(54) **METHOD FOR MANUFACTURING COMPOSITE MATERIAL**
VERFAHREN ZUR HERSTELLUNG EINES VERBUNDSTOFFMATERIALS
PROCÉDÉ DE FABRICATION DE MATÉRIAU COMPOSITE

(30) Priority: 16.09.2009 FI 20095952
(43) Date of publication of application: 25.07.2012
(73) Proprietor: Oy Lunawood Ltd, 15140 Lahti (FI)
(72) Inventor: KÄRKKÄINEN, Olavi, FI-74170 Iisalmi (FI); KÄRKI, Timo, FI-55800 Imatra (FI)
(74) Representative: Kolster Oy Ab
(86) International application number: PCT/FI2010/050715
(87) International publication number: WO 2012/035192

(56) References cited:
- EP-A1- 1 815 956
- FR-A1- 2 609 927
- US-A- 5 516 472
- US-B1- 6 337 138
- 'Engineering performance of wood-plastic composites (WPC) - ECOMBO Research Project.' PRESENTATION [ONLINE]. VTT, TECHNICAL RESEARCH CENTRE OF FINLAND, [Online] 2006, XP008177445 Retrieved from the Internet: <URL:http://www.woodwisdom.fi/content/Event s/AnnualSeminar2006Hki/PresannualseminECOMB O050406Ritschkoff.pdf?from=-674667962487178 engineering performance of wood-plastic> [retrieved on 2011-05-19]

## Description

The invention relates to a method for manufacturing composite material, in which method, as wood material is used heat-treated wood material which is ground fine, the fine heat-treated wood material is mixed with plastic material such that the ratio of wood material in the wood-plastic composite material is about 55-95 weight percentages of the mixture weight, and the mixture is manufactured into wood-plastic composite material.

As raw materials of wood-plastic composite materials, wood material, plastic and binders are used. The materials and agents are mixed together and the mass formed is treated in a suitable way in a temperature appropriate for the purpose into a desired product.

The purpose is to create various weather- and wear-resistant products of the wood-plastic composite materials to replace, inter alia, products manufactured of impregnated wood. Advantages of the wood-plastic composite material are good durability against both moisture and dents, being environmentally-friendly and recyclability.

As the wood material of the wood-plastic composite material, normal wood as chips or dust is commonly utilised. As the plastic material, plastic materials suitable for the purpose, such as e.g. polyethylene or polypropylene plastic, are usually employed. It is known that the moisture-durability and hardness of the wood-plastic composite are affected by the properties and proportions of both wood material and plastic material.

It is also known to use as the wood material of the wood-plastic composite material the so-called heat-treated wood as dust or chips. When manufacturing thermally-modified wood material i.e. heat-treated wood, the wood material is treated in a high temperature and introduced to various pressures. The purpose is to effectively dry the wood material and remove its moisture without substantially changing the dimensions of wood. In the process, wood obtains valuable properties. The moisture of thermally-modified wood material is low and it can absorb almost no moisture, and it is well suited for use in, inter alia, various humid environments. The properties of thermally-modified wood differ greatly from the ones of the so-called normally dried wood.

A disadvantage of recent wood-plastic composite materials is that the material or their components can react to varying moisture conditions and other external conditions, whereby the end result obtained does not retain its shape and dimensions adequately enough in demanding conditions of use.

US patent 5,516,472 discloses an extruded synthetic wood compiosition and a method for making the same. The mixed material is extruded into a die system comprising a transition die, a stranding die and a molding die. The flow rate of the material through the die system is equalized by preforming the mixed material with the transition die to a shape approaching the end product, stranding the material with the stranding die to form individual strands, and compressing the individual strands with the molding die after it exits the stranding die. The die system may also include an adapter die positioned between the extruder and the transition die which functions to control the tnnennt of mixed material which enters the his system.

EP patent application 1 815 956 discloses a coloured PVC-based composite. The invention relates to a process for making a PVC-wood composite, comprising the following steps a) drying wood particles until their water content is below 5%, b) colouring the dried particles by impregnating them with a colouring material, c) combining the thus formed coloured particles with a PVC polymer, characterized in that the colouring material comprises an organic dye dissolved in a plasticizer for PVC.

US patent 6,337,138 discloses a celluloisic, inorganic-filled plastic composite. The composite includes about 30% to about 70% by weight of the composite of cellulosic material, about 1% to about 20% by weight of the composite of talc, and about 25% to about 40% by weight of the composite of polyethylene. An extruded article and a method of making the cellulosic, inorganic-filled plastic composite are also disclosed.

An object of the invention is to introduce a method for manufacturing composite material, which eliminates disadvantages related to recent methods and products. A particular object of the invention is to introduce a method which is inexpensive of its material costs, more cost-effectively manufacturable than earlier and which provides a product which is more stable and wood-like than earlier. Furthermore, an object of the invention is to introduce a method which can affect the properties of end products in accordance with the purpose and requirements of use.

The object of the invention is achieved with the method for manufacturing composite material which is characterised by what is presented in the claims.

In the method according to the invention, heat-treated wood material is ground such that the particle size of ground heat-treated wood material is 0.8 mm or less.

According to the invention, heat-treated wood material is ground such that the particle size of about 70-85% of the volume of ground heat-treated wood material is about 0.5-0.8 mm and the particle size of about 15-30% of the volume of wood is less than 0.1 mm.

In an advantageous embodiment according to the invention, the particle size of about 75-80% of the volume of ground heat-treated wood material is about 0.5-0.8 mm and the particle size of about 20-25% of the volume of wood is less than 0.1 mm.

It has been proved that the key properties of composite material obtained with the method can be substantially improved by affecting the particle size of heat-treated wood raw material and by retaining its particle size as 0.8 mm at the most. Furthermore, the key properties of composite material can be improved by using two or more different particles exactly determined and by varying their mutual mixing ratio. Some of the particles are extremely fine, less than 0.1 mm, and these operate as a binder in the processing of particle material of larger size and plastic.

In the method, wood material is heat-treated before grinding. In an advantageous embodiment of the invention, the treatment temperature is adjusted to 180-210°C with the thermal-modification technique.

In a further advantageous additional embodiment of the invention, the treatment temperature is adjusted to 180-190°C with the thermal-modification technique. When the treatment temperature is adjusted to 180-190°C, good breaking and bending resistance are obtained according to tests.

In a next advantageous additional embodiment of the invention, the treatment temperature is adjusted to 200-210°C with the thermal-modification technique. When the treatment temperature is adjusted to 200-210°C, good moisture resistance and product raw material almost non-swelling are obtained.

In a yet further advantageous additional embodiment of the invention, the treatment temperature is adjusted to 190-200°C with the thermal-modification technique. Then, it is possible to optimise the technique and provide good breaking and bending resistance, good moisture resistance and product raw material almost non-swelling in the same end product.

In the above ways, studies show that exceptionally good hardness is obtained in the products being manufactured and their other key properties can also be accurately optimised in accordance with the purpose of use. According to studies, when manufactured in a way according to the method, the passing through of the wood-plastic mass is improved, it retains its profile shape and the number of shutdowns decreases, which directly affect the manufacturing capacity.

By varying the mutual ratios of particles and the thermal modification of wood, the properties of end products can be affected according to the purpose and requirements of use. Thus, it is possible to substantially decrease the volume of plastic material used without weakening the properties of the end product and retain its wood-like nature.

It should be noted that, by means of the heat-treatment and grinding of heat-treated wood and by means of controlling its process and treatment, a fine mass is obtained which cannot be achieved of ordinary wood with normal methods and normal costs.

The properties of heat-treated wood are well applicable to this purpose, because the heat-treated wood is of uniform quality and uniformly distributed and does not change almost at all in this form due to moisture and other external factors. An advantage is also the fact that it is possible to manufacture wood-plastic composite material by using heat-treated wood material generated as a by-product in the production of heat-treated wood and flour formed of it. Then, the flour generated in the manufacture of heat-treated wood can be utilised advantageously directly on the by-product line in the production of heat-treated wood as such extremely cost-effectively. Furthermore, it is possible that the production employs non-marketable material oddments of the production of heat-treated wood by grinding them to suitable flour. It is also possible to utilise such wood material, the so-called weed tree, which would not otherwise be heat-treated, to treat it normally in the heat-treated wood process, ground it to flour and use it in the method according to this invention as wood material. Then, all raw materials can be employed.

The method according to the invention produces a mass based on heat-treated wood in which a required volume of plastic material or other equivalent materials is inserted as a binder, by suitably combining which and with various treatment ways, it is possible to obtain optimal raw material for different purposes for which it has not traditionally been possible to utilise wood. When manufacturing test pieces, wood-like products with a clean surface, resistant to weather, retaining their dimensions and shape have been provided with a small volume of plastic material.

It is also possible to feed the extractives of wood released in the heat-treatment into the mass as the binder. Flour can be manufactured of solid heat-treated wood which yields good cost-efficiency. A further advantage is that, with the method which employs raw material with good properties according to the invention, it is possible to manufacture various products which replace current products.

The method utilises plastic materials known as such and earlier utilised in wood-plastic composite materials.

In the method according to the invention, the volume of plastic material used is advantageously about 5-35 weight percentages of the mixture weight depending on the purpose of use. The content of additional binder can be advantageously 0-20 weight percentages. Then, the method according to the invention offers considerable benefit in costs, because the ratio of cheaper fibre material is considerably larger than earlier, but still provides the same good properties for the part of moisture resistance and dimension stability as when using a common fibre material and a greater ratio of plastic. The price of plastic raw material is about tenfold the one of fibre material. Thus, the price of the product is obtained inexpensive and the manufacture cost-effective. The wood-like nature of the product is retained, its appearance is natural and ecological and the colour of the product can be changed in the heat-treatment in accordance with the level of heat-treatment without the use of colourings. Additionally, the product is durable and easily machinable and its surface can be obtained smooth. The disposal of the product after use does not cause such a great problem as products having a higher plastic content. A further advantage is also that, when the ratio of wood in the end product is large, the heat- and cold-conductivity of the product is closer to the thermal conductivity properties of common wood than those of a product having a high ratio of plastic material.

For specific purposes of use, it is possible to use, inter alia, polyethylene and such equivalent swelling agents/binding agents as the binder.

In solid wood production in an LW process, the treatment can be performed acceleratedly without weights, ignoring the deformation of wood and ground without moisturising and steadying. Then, even weed trees can be the raw material.

In various embodiments of the invention, the volume of wood material and plastic material can vary as above in accordance with the purpose and requirements of use.

In various embodiments of the method, the ratio of wood material is between about 55-95 weight percentages, the ratio of plastic material can vary between about 5-35 weight percentages and the content of additional binder can vary between about 0-20 weight percentages.

In advantageous embodiments of the invention, the ratio of wood material can vary between about 65-95 weight percentages, the ratio of plastic material can vary between about 5-30 weight percentages and the content of additional binder can vary between about 0-15 weight percentages.

In advantageous additional embodiments of the invention, the ratio of wood material can vary between about 75-95 weight percentages, the ratio of plastic material can vary between about 5-25 weight percentages and the content of additional binder can vary between about 0-10 weight percentages.

A workable example is an embodiment which includes 80 weight percentages of heat-treated wood material flour, 18 weight percentages of polyethylene or polypropylene plastic and 2 weight percentages of coupling agent maleic anhydride and/or maleated polypropylene. It has been verified in comparison tests that the workability of the material mixture with this mixture ratio is at a totally different level and much better than the one of material mixture manufactured of the common wood mass. Another embodiment employs 90 weight percentages of heat-treated wood material flour, 9 weight percentages of plastic raw material and 1 weight percentage of additional binder. When the wood material content is high (e.g. 80-95 weight percentages), the properties and the appearance of the product are more wood-like compared to a one having a low wood material content.

Another embodiment is a mixture which includes about 65-70% of wood fibre, about 18-27% of plastic material and about 8-12% of talc used as the additional binder. According to a study, adding about 10% of talc in the mixture enables improving all of the mechanical properties and the moisture strength (inter alia, water absorption) of the product. Therefore, excellent consistency for terrace boards, among others, can be obtained.

The method according to the invention employs wood material suitable for the purpose.

In the heat-treatment process, wood material is heated for periods of various duration in different temperatures. In a method, wood is placed in a heat-treatment space the temperature of which is quickly risen to about 100°C, then the temperature is slowly risen up to about 120-130°C. At the next step, the temperature is increased to about 190-200°C and kept there for some time. At the final step, wood is cooled down and the temperature is controllably decreased to normal temperature. This process requires about 36 hours. When wishing to obtain high-quality thermally-modified wood material, the wood has to be treated carefully and the temperatures and treatment times have to be continuously monitored.

After the heat-treatment process, the thermally-modified wood is inspected and broken or discoloured wood is removed. Then, the thermally-modified wood is treated in a desired way in accordance with the purpose of end use. This step produces wood pieces, cutter chips and sawdust.

In the method according to the invention, these production residues of thermally-modified wood, i.e. wood pieces, cutter chips, sawdust, broken wood, discoloured wood, are employed as the raw material of the method and are utilised being thermally-treated wood of their properties. In the method, the wood in question is ground into fine powder, plastic material and/or other mixture material is added, the mixture is heated into a temperature fit for the purpose and products of desired shape are formed of it.

It is also possible to heat-treat so-called difficult-to-use wood i.e. such wood of which no purposeful products can be obtained. Such wood are, inter alia, sawing waste, branches, tops. When such wood is heat-treated, it is substantial that the wood is effectively obtained dry, but splits or deformations can be formed in it during drying. Then, the heat-treatment period can be considerably decreased and the heat-treatment can be performed e.g. in about 18 hours, which is about half of the duration of the above heat-treatment process. This way, wood material to be used as the raw material of the method according to this specification is obtained cost-effectively and quickly.

The invention is not limited to the described advantageous embodiments, but it can vary within the scope of the inventive idea presented in the claims.

## Claims

1. A method for manufacturing composite material, the method comprising
grinding wood material to a particle size of 0.8 mm or less,
mixing the ground wood material with plastic material manufacuting the mixture into a wood-plastic composite,
**characterised in that**
the wood material is thermally modified wood material,
the ratio of ground thermally modified wood material in the wood-plastic composite material is about 55-95 weight percentages of the mixture weight,
the particle size of about 70-85% of the volume of the ground thermally modified wood material is about 0.5-0.8 mm and the particle size of about 15-30% of the volume of the ground thermally modified wood material is less than 0.1 mm.

2. A method according to claim 1, **characterised in that** the particle size of about 75-80% of the volume of the ground thermally modified wood material is about 0.5-0.8 mm and the particle size of about 20-25% of the volume of the ground thermally modified wood material is less than 0.1 mm.

3. A method according to claim 1 or 2, **characterised in that** the treatment temperature when thermally modifying the wood material is adjusted to 180-210°C with the thermal-modification technique.

4. A method according to claim 3, **characterised in that** the treatment temperature when thermally modifying the wood material is adjusted to 180-190°C with the thermal-modification technique.

5. A method according to claim 3, **characterised in that** the treatment temperature when thermally modifying the wood material is adjusted to 200-210°C with the thermal-modification technique.

6. A method according to claim 3, **characterised in that** the treatment temperature when thermally modifying the wood material is adjusted to 190-200°C with the thermal-modification technique.

7. A method according to claim 1, **characterised in that** the ratio of ground thermally modified wood material in the wood-plastic composite material is about 65-95 weight percentages of the mixture weight.

8. A method according to claim 1, **characterised in that** the ratio of ground thermally modified wood material in the wood-plastic composite material is about 75-95 weight percentages of the mixture weight.

9. A method according to claim 1, **characterised in that** the ratio of plastic material in the wood-plastic composite material is about 5-35 weight percentages of the mixture weight.

10. Wood-plastic composite material produced by the method in any of claims 1-9.

## Patentansprüche

1. Verfahren zur Herstellung von Verbundmaterial, wobei das Verfahren Folgendes umfasst:
Schleifen von Holzwerkstoff auf eine Partikelgröße von 0,8 mm oder weniger,
Mischen des geschliffenen Holzmaterials mit Kunststoffmaterial
Herstellung der Mischung zu einem Holz-KunststoffVerbund,
**dadurch gekennzeichnet, dass**
der Holzwerkstoff ein thermisch modifizierter Holzwerkstoff ist,
der Anteil von geschliffenem, thermisch modifiziertem Holzwerkstoff im Holz-Kunststoff-Verbundwerkstoff etwa 55-95 Gewichtsprozent des Mischgewichts beträgt, die Partikelgröße von etwa 70-85 % des Volumens des geschliffenen, thermisch modifizierten Holzwerkstoffs etwa 0,5-0,8 mm beträgt und die Partikelgröße von etwa 15-30 % des Volumens des geschliffenen, thermisch modifizierten Holzwerkstoffs weniger als 0,1 mm beträgt.

2. Verfahren nach Anspruch 1, **dadurch gekennzeichnet, dass** die Partikelgröße von etwa 75-80 % des Volumens des geschliffenen thermisch modifizierten Holzmaterials etwa 0,5-0,8 mm und die Partikelgröße von etwa 20-25 % des Volumens des geschliffenen thermisch modifizierten Holzmaterials weniger als 0,1 mm beträgt.

3. Verfahren nach Anspruch 1 oder 2, **dadurch gekennzeichnet, dass** die Behandlungstemperatur beim thermischen Modifizieren des Holzwerkstoffs mit der Wärmemodifikationstechnik auf 180-210 °C eingestellt wird.

4. Verfahren nach Anspruch 3, **dadurch gekennzeichnet, dass** die Behandlungstemperatur beim thermischen Modifizieren des Holzwerkstoffs mit der Thermomodifikationstechnik auf 180-190 °C eingestellt wird.

5. Verfahren nach Anspruch 3, **dadurch gekennzeichnet, dass** die Behandlungstemperatur beim thermischen Modifizieren des Holzwerkstoffs mit der Thermomodifikationstechnik auf 200-210 °C eingestellt wird.

6. Verfahren nach Anspruch 3, **dadurch gekennzeichnet, dass** die Behandlungstemperatur beim thermischen Modifizieren des Holzwerkstoffs mit der Thermomodifikationstechnik auf 190-200 °C eingestellt wird.

7. Verfahren nach Anspruch 1, **dadurch gekennzeichnet, dass** der Anteil von geschliffenem, thermisch modifiziertem Holzwerkstoff in dem Holz-Kunststoff-Verbundwerkstoff etwa 65-95 Gewichtsprozent des Mischungsgewichts beträgt.

8. Verfahren nach Anspruch 1, **dadurch gekennzeichnet, dass** der Anteil von geschliffenem, thermisch modifiziertem Holzwerkstoff in dem Holz-Kunststoff-Verbundwerkstoff etwa 75-95 Gewichtsprozent des Mischungsgewichts beträgt.

9. Verfahren nach Anspruch 1, **dadurch gekennzeichnet, dass** der Anteil von Kunststoffmaterial in dem Holz-Kunststoff-Verbundmaterial etwa 5-35 Gewichtsprozent des Mischgewichts beträgt.

10. Holz-Kunststoff-Verbundwerkstoff, hergestellt nach dem Verfahren nach einem der Ansprüche 1-9.

## Revendications

1. Procédé pour fabriquer un matériau composite, le procédé comprenant
le broyage d'un matériau en bois jusqu'à une granulométrie de 0,8 mm ou moins,
le mélange du matériau en bois broyé avec une matière plastique,
la fabrication du mélange en un composite de bois-plastique,
**caractérisé en ce que**
le matériau en bois est un matériau en bois modifié thermiquement,
la proportion du matériau en bois broyé modifié thermiquement dans le matériau composite de bois-plastique est d'environ 55 à 95 % en poids du poids du mélange,
la granulométrie d'environ 70 à 85 % en volume du matériau en bois broyé modifié thermiquement est d'environ 0,5 à 0,8 mm et la granulométrie d'environ 15 à 30 % en volume du matériau en bois broyé modifié thermiquement est inférieure à 0,1 mm.

2. Procédé selon la revendication 1, **caractérisé en ce que** la granulométrie d'environ 75 à 80 % en volume du matériau en bois broyé modifié thermiquement est d'environ 0,5 à 0,8 mm et la granulométrie d'environ 20 à 25 % en volume du matériau en bois broyé modifié thermiquement est inférieure à 0,1 mm.

3. Procédé selon la revendication 1 ou 2, **caractérisé en ce que** la température de traitement lors de la modification thermique du matériau en bois est ajustée à 180-210°C avec une technique de modification thermique.

4. Procédé selon la revendication 3, **caractérisé en ce que** la température de traitement lors de la modification thermique du matériau en bois est ajustée à 180-190°C avec une technique de modification thermique.

5. Procédé selon la revendication 3, **caractérisé en ce que** la température de traitement lors de la modification thermique du matériau en bois est ajustée à 200-210°C avec une technique de modification thermique.

6. Procédé selon la revendication 3, **caractérisé en ce que** la température de traitement lors de la modification thermique du matériau en bois est ajustée à 190-200°C avec une technique de modification thermique.

7. Procédé selon la revendication 1, **caractérisé en ce que** la proportion du matériau en bois broyé modifié thermiquement dans le matériau composite de bois-plastique est d'environ 65 à 95 % en poids du poids du mélange.

8. Procédé selon la revendication 1, **caractérisé en ce que** la proportion du matériau en bois broyé modifié thermiquement dans le matériau composite de bois-plastique est d'environ 75 à 95 % en poids du poids du mélange.

9. Procédé selon la revendication 1, **caractérisé en ce que** la proportion du matériau plastique dans le matériau composite de bois-plastique est d'environ 5 à 35 % en poids du poids du mélange.

10. Matériau composite de bois-plastique produit par le procédé de l'une quelconque des revendications 1 à 9.
